# EUROPEAN PATENT APPLICATION

(11) **EP 2 165 885 A1**
(43) Date of publication of application: **24.03.2010**
(21) Application number: 08465008.4
(22) Date of filing: 17.09.2008
(51) Int. Cl.: B60Q 7/00

(54) **Traffic warning triangle**

(71) Applicant: Suwary SA, 95-200 Pabianice (PL)
(72) Inventor: Napieracz, Zbigniew, 95-200, Pabianice (PL)
(74) Representative: Rumpel, Alicja

(57) **Abstract**

The road warning triangle is composed of arms, which are provided with reflective elements and additional fabric spread between the arms, said fabric with fluorescent properties, each arm of the triangle is divided in two sections by means of stable, permanent joint 8 in form of a riveted joint. The locks 9 and 12 prevent skew arms 1 or 2 from their automatic folding when they are in their working position. Free ends of skew arms 2 are joined together with the snaps 13. Each bar leg 15 of the triangle is divided in two sections 16 and 17, and the section 17 can be moved parallel to the section 16, the end of which is stabilized in the profile 6 fastening the bar legs 15 of the triangle.

## Description

The subject-matter of the invention is the warning triangle to be used in road vehicles in order to inform other road users about possible occurrence of any dangerous situation.

Equipment of vehicles earmarked for informing and warning other road users about occurring dangers is produced as elements or equipments, electrically powered or not powered, which have a form of reflective surfaces constituting a permanent part of a vehicle or its auxiliary equipment set up on the vehicle itself or on the road. In some legal regulations referring to road traffic on highways, the required equipment of the said kind are, among others, warning triangles. The detailed requirements, such warning triangles should comply with, are determined in the EEC UNO Rules No 27. For practical reasons, such triangles were redesigned towards folded equipment provided with different kinds of warning surfaces and stabilized in a different way on the ground's surface.

According to the patent description PL 341016, the road warning triangle has been described, which is to be set up behind the vehicle at a certain distance from it. Reflective arms are folded and mounted on a rigid, steel plate stiffening the horizontal arm. At the ends of this arm there are plastic profiles, which form a fastening for unfolded bar legs of the triangle. These legs are taken aside in a horizontal plane and in a position of its maximal spacing, the bars are being blocked in small pockets. In similar solutions, a change in shape of bar legs with a simultaneous maintenance of both direction and way of their unfolding to reach working position, can be noticed.

According to the patent description DE 101 58 172, the road warning triangle has been described, in which bar legs have been bent slightly in a close vicinity to fixing points in order to improve stability of the entire assembly. Similarly to the solution as described previously, the legs are being blocked in working position, and respective ends of reflective surfaces are lifted upwards and joined together. Shapes of bar legs are different; they can be bent several times in order to better expose warning planes or in order to lower the centre of gravity of the assembly.

According to the patent description EP 1 481 849, the bars were bent directly behind the fixing point and at some distance from it; respectively, the shape of fixing elements causes displacement of free ends of bar legs down resulting in lifting of reflective surfaces upwards and in their better exposition.

In order to increase resistance of the device, the elements which fasten legs to triangle arms are made of other materials, e.g. of steel. Such fixing element can be found in the patent description DE 100 54 656. Also, the way of unfolding the legs which stabilizes the triangle, was changed accordingly. They are now taken aside in a vertical plane whereas their resting plane is parallel to reflective arms being lifted upwards.

The road warning triangle according to the invention has arms provided with reflective elements, preferably these arms should refract and reflect luminous fluxes with their entire volume or the entire surface of arms is covered with a substance or coating characterized by the above properties. Also preferably, fixing points of surfaces with fluorescent properties to triangle arms are not situated in the rotation points of arms one in relation to the other. Moving arms are mounted rotationally on a horizontal arm and, using the same joint, to profiles fastening bar legs of triangle. Advantageous feature is that such a joint is made as a riveted joint, what makes it impossible to easily disassemble triangle elements and preferably profiles are made of light plastic. The lower arm of the triangle is stiffened. Preferably, such stiffening fulfills the function of additional load. Stiffening of the horizontal arm is shorter than the total length of the horizontal arm unfolded into its working position. Preferably, the total length of both stiffening and fastening profiles of the triangle is close to the length of unfolded horizontal arm. Each arm of the triangle is divided in at least two sections by means of stable, permanent joint. Preferably, such a joint has a form of a riveted joint, enabling rotation of individual sections of arms one against each other. Nevertheless, in case of the horizontal arm of the triangle, this joint is situated outside the arm contour, preferably below the horizontal arm of the triangle. In case of skew arms in a point of their rotation to reach unfolded position which, at the same time, is not the point of rotation in relation to other arms, locks are placed, at least one on each skew arm of triangle. Preferably, these locks have a form of grooves and mating with them lengthwise projections situated on reflective and non-reflective planes of skew arms of the triangle, which are turned one to each other according to the invention. These locks prevent skew arms from their automatic unfolding when they are in their working position. The similar lock is situated in the middle part of the horizontal arm, on its upper end which is opposite to the lower one, below which axis of rotation of sections on the horizontal arm one against each other is situated. After unfolding of the triangle arms, their rectilinear shape is kept and lock make it impossible to fold the automatically, and free ends of skew arms are joined together with a snap, being an element of free ends of skew arms of the triangle.

In the lower part of profiles fastening triangle legs, openings are located horizontally where appropriately bent ends of the bar legs are introduced into. Preferably, these openings are situated crosswise at different heights or, in another example of making, they are made as shifted one in relation to the other and situated at the same height in the profile, fastening triangle legs. Preferably, the bent ends of legs are additionally protected against their slipping out from the fastening profiles by usage of relevant snap rings or by flattening of the bar fragment. Such flattening can be performed on the ending of the bar or on this section of the bar, which is visible in the opening made in the base of the fastening profile. In another version of making, the bar is wedged into the opening of the profile by means of a local offset matching its shape. The bar leg of the warning triangle is bent in at least three points, at some distance from the fastening profiles.

Each bar leg of the triangle is divided in at least two sections, from which at least one may be moved parallel to this section, the end of which is stabilized in the profile fastening bar legs of the triangle. On a free end of the section stabilized in the profile fastening bar legs of the triangle, a profile to join sections of bar legs of the triangle is situated. Its rotational movement around longitudinal axis of the section stabilized in the profile fastening bar legs of the triangle is prevented thanks to bending of this section end and recess or opening mating with such a bend, made in the profile joining sections of bar legs of the triangle. Preferably, this opening is oval or has rectangular section.

Section of the triangle bar leg moving along the section of the leg, which is stabilized in the profile fastening bar legs of the triangle, on its one end is bent at an angle close to right angle, whereas on the other end a local deformation of the bar forming this section is made. The above prevents movable section of the triangle bar leg from its falling out from the profile joining sections of the triangle leg, with the bent of movable section of the triangle leg situated on the side of the profile fastening triangle legs, the profile joining sections of the triangle legs.

Thanks to crosswise setting of ends of the fastened ends of bar legs, which coincides with diagonals of bases of fastening profiles as well as due to appropriate bending of these ends, during unfolding of the triangle legs free ends are moving vertically down on the triangle plane and then, they are taken aside on the plane which is perpendicular to the triangle plane. Such displacement ensures better stability of the set of elements of unfolded triangle and prevents the bar legs from folding and the triangle itself from falling down due to incidental knocking or a gust of wind. The legs in unfolded position are stabilized with deadweight of the triangle itself and this is why their incidental turning from working position into folded or partly folded position is impossible. When the triangle is folded, mutual setting of its elements results in the necessity to have only a small area to keep it and its easy preparation to work allows its usage by every road user. Joining of triangle arms and the fastening profile is made by means of riveting. At the same time, a rivet is an axis of rotation for arms rotating one against each other.

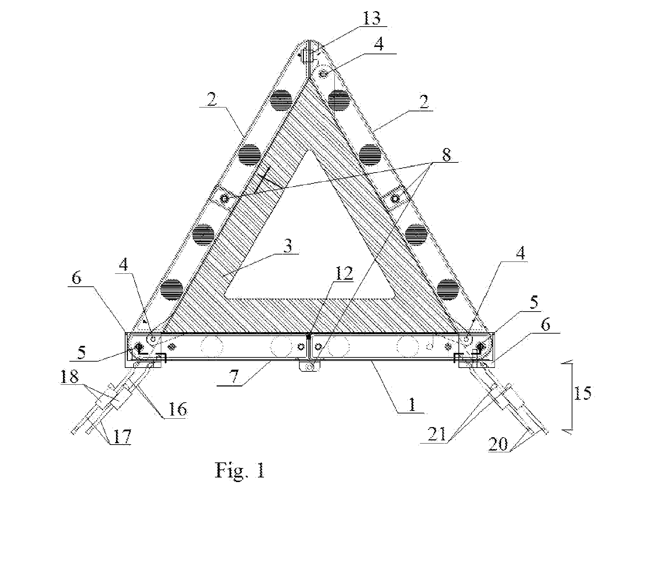

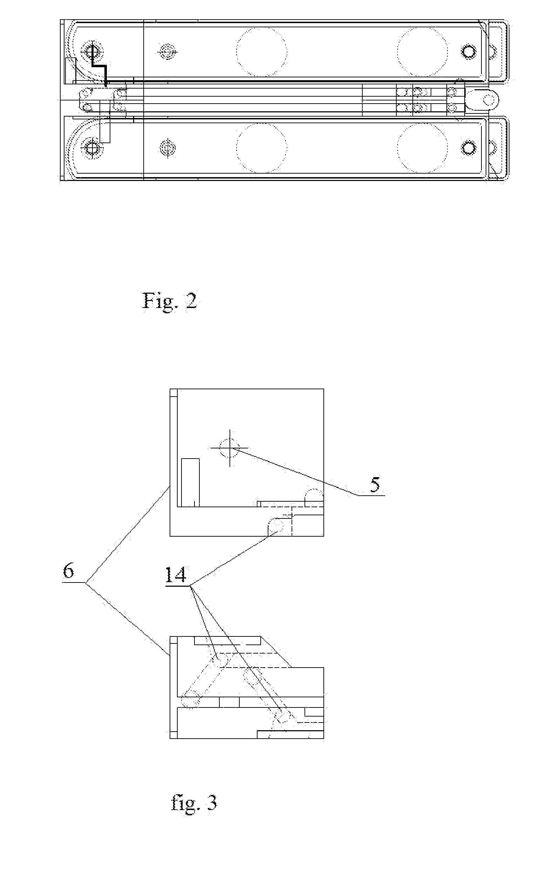

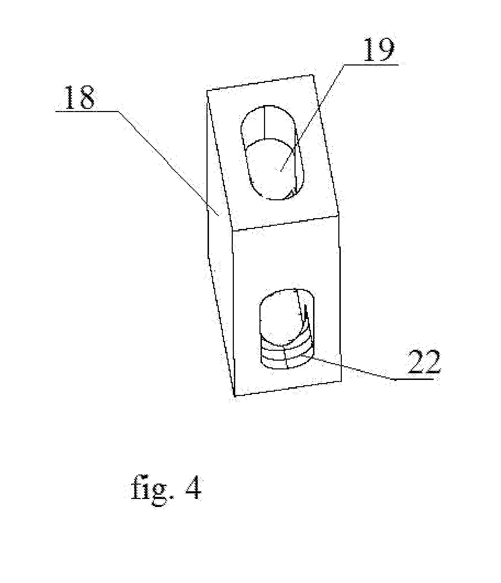

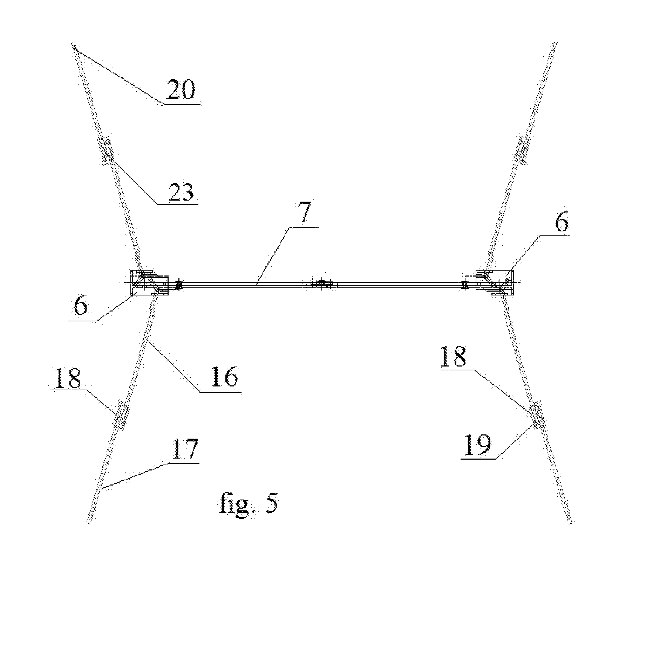

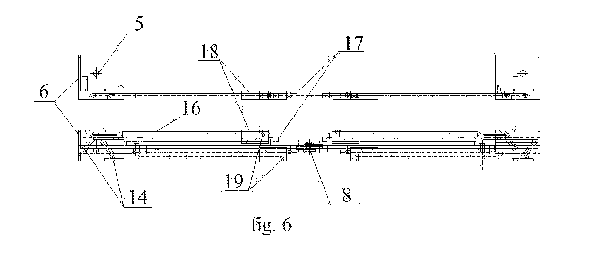

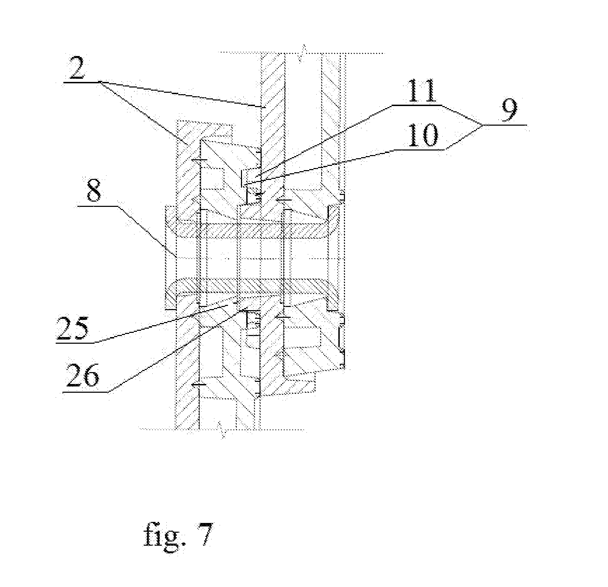

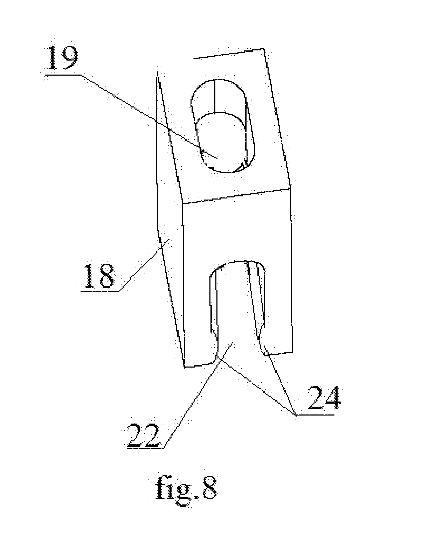

The subject-matter of the invention has been presented in figures, where: Fig.1 presents a view of unfolded warning triangle, Fig. 2 - presents folded warning triangle according to the invention in a front view, Fig. 3 - presents the profile fastening triangle legs in front and top views, Fig. 4 - presents the profile to join sections of triangle legs , Fig. 5 - shows unfolded base of the triangle in a top view, Fig. 6 presents location of folded triangle legs prior to folding of the horizontal base of the triangle, Fig. 7 presents locking of skew arms of the triangle and Fig. 8 presents the profile to join sections of legs in accordance with the second example of making.

### Example I

The road warning triangle according to the invention is composed of surfaces of the horizontal arm1 and the skew arms 2, which are provided with reflective elements. They were made in a way so that they can refract and reflect luminous fluxes. Within the space formed between the arms 1 and 2, the additional fabric with fluorescent properties has been spread between the arms 1 and 2. Fixing points 4 of the fabric with fluorescent properties 3 to triangle arms 1 and 2 are not situated in the rotation points 5 of the arms, rotating one in relation to the other. The skew arms 2 are movable and they are fixed rotationally to the horizontal arm 1 and ,using the same joint, to the fastening profiles 6 to fasten bar legs of the triangle. Such a joint is made as a riveted joint, what makes it impossible to easily disassemble triangle elements. The horizontal arm 1 of the triangle is stiffened. Such stiffening 7 fulfills function of additional load and, moreover, the stiffening 7 of the horizontal arm 1 is shorter than the total length of the horizontal arm 1 unfolded into its working position. The total length of the stiffening 7 and fastening profiles 6 of the triangle legs is close to the length of the unfolded horizontal arm 1. Each arm 1 and 2 of the triangle is divided in two sections by means of stable, permanent joint 8. This joint 8 has a form of a riveted joint, enabling rotation of individual sections of arms one against each other. Nevertheless, in case of the horizontal arm 1 of the triangle, the joint 8 is situated outside a contour of the arm 1, below the horizontal arm 1 of the triangle. In case of skew arms 2, joints 8 being points of their rotation to reach unfolded position which, at the same time, are not the points of rotation in relation to other arms, locks 9 are placed, at least one on each skew arm 2 of the triangle. These locks have a form of grooves 10 and mating with them lengthwise projections 11 situated on reflective and non-reflective planes of skew arms 2 of the triangle, which are turned one to each other according to the invention. The locks 9 prevent skew arms 2 from their automatic folding when they are in their working position. The additional lock 12 is situated in the middle part of the horizontal arm 1. Around the rotational joint 8, the auxiliary flange 25 and the pin 26 mating with it in order to stabilize and fix the position are mounted.

After unfolding of the triangle arms 1 and 2, their rectilinear shape is kept and locks 9 and 12 make it impossible to fold them automatically, and free ends of skew arms 2 are joined together with the snaps 13, being elements of free ends of skew arms 2 of the triangle.

In the lower part of profiles 6 fastening triangle legs, openings 14 are located horizontally where appropriately bent ends of the bar legs 15 are introduced into. The openings 14 are made as shifted once in relation to the other and situated at the same height in the profile 6 fastening triangle legs. The bar leg 15 of the warning triangle is bent in three points, at some distance from the fastening profiles 6.

Each bar leg 15 of the triangle is divided in two sections 16 and 17, and the section 17 can be moved parallel to the section 16, the end of which is stabilized in the profile6 fastening the bar legs 15 of the triangle. On a free end of the section 16 stabilized in the profile 6 fastening bar legs 15 of the triangle, the profile 18 joining sections 16 and 17 of bar legs 15 of the triangle is situated. The rotational movement of the profile 18 around longitudinal axis of the section 16 stabilized in the profile fastening bar legs 15 of the triangle is prevented thanks to bending of the end of the section 16 and recess 19 mating with such a bend, made in the profile 18 joining sections of bar legs 15 of the triangle.

The section 17 of the triangle bar leg moving along the section 16 of the leg, which is stabilized in the profile 6 fastening bar legs 15 of the triangle, on its one end is bent at an angle close to right angle, whereas on the other end a local deformation 20 of the bar forming the section 17 is made. The above prevents movable section 17 of the triangle bar leg from its falling out from the profile 18 joining sections of the triangle bar leg 15, with the bent 21 of movable section 17 of the leg of the triangle moving within the section 18 is situated on the side of the profile 6 fastening triangle legs. In the unfolded position, movements of the section 17 are blocked with mating recess/opening 22 and locking deformation 23 of the section 17 of the triangle leg. Thanks to crosswise setting of ends of fastened ends of the bar legs 15, which coincides with diagonals of bases of fastening profiles 6 as well as due to appropriate bending of these ends, during unfolding of the triangle legs 15 free ends are moving vertically down on the triangle plane and then, they are taken aside on the plane which is perpendicular to the triangle plane. Such displacement ensures better stability of the set of elements of unfolded triangle and prevents the bar legs 15 from folding and the triangle itself from falling down due to incidental knocking or a gust of wind. The legs 15 in unfolded position are stabilized with deadweight of the triangle itself and this is why their incidental turning from working position into folded or partly folded position is impossible. When the triangle is folded, mutual setting of its elements results in the necessity to have only a small area to keep it and its easy preparation to work allows its usage by every road user. Joining between the triangle arms 1 and 2 and the fastening profile 6 is made by means of riveting. At the same time, a rivet is an axis of rotation for the arms 1 and 2, rotating one against each other.

### Example II

The road warning triangle according to the invention is composed of surfaces of the horizontal arm1 and the skew arms 2, which are provided with reflective elements. They were made in a way so that they can refract and reflect luminous fluxes. Within the space formed between the arms 1 and 2, the additional fabric with fluorescent properties has been spread between the arms 1 and 2. Fixing points 4 of the fabric with fluorescent properties 3 to triangle arms 1 and 2 are not situated in the rotation points 5 of the arms, rotating one in relation to the other. The skew arms 2 are movable and they are fixed rotationally to the horizontal arm 1 and ,using the same joint, to the fastening profiles 6 to fasten bar legs of the triangle. Such a joint is made as a riveted joint, what makes it impossible to easily disassemble triangle elements. The horizontal arm 1 of the triangle is stiffened. Such stiffening 7 fulfills the function of additional load and, moreover, the stiffening 7 of the horizontal arm 1 is shorter than the total length of the horizontal arm 1 unfolded into its working position. The total length of the stiffening 7 and fastening profiles 6 of the triangle legs is close to the length of the unfolded horizontal arm 1. Each arm 1 and 2 of the triangle is divided in two sections by means of stable, permanent joint 8. This joint 8 has a form of a riveted joint, enabling rotation of individual sections of arms one against each other. Nevertheless, in case of the horizontal arm 1 of the triangle, the joint 8 is situated outside a contour of the arm 1, below the horizontal arm 1 of the triangle. In case of skew arms 2, joints 8 being points of their rotation to reach unfolded position which, at the same time, are not the points of rotation in relation to other arms, locks 9 are placed, at least one on each skew arm 2 of the triangle. These locks have a form of grooves 10 and mating with them lengthwise projections 11 situated on reflective and non-reflective planes of skew arms 2 of the triangle, which are turned one to each other according to the invention. The locks 9 prevent skew arms 2 from their automatic folding when they are in their working position. The additional lock 12 is situated in the middle part of the horizontal arm 1. Around the rotational joint 8, the auxiliary flange 25 and the pin 26 mating with it in order to stabilize and fix the position are mounted.

After unfolding of the triangle arms 1 and 2, their rectilinear shape is kept and locks 9 and 12 make it impossible to fold them automatically, and free ends of skew arms 2 are joined together with the snaps 13, being elements of free ends of skew arms 2 of the triangle.

In the lower part of profiles 6 fastening triangle legs, openings 14 are located horizontally where appropriately bent ends of the bar legs 15 are introduced into. The openings 14 are made as shifted ones in relation to the other and situated at the same height in the profile 6 fastening triangle legs. The bar leg 15 of the warning triangle is bent in three points, at some distance from the fastening profiles 6.

Each bar leg 15 of the triangle is divided in two sections 16 and 17, and the section 17 can be moved parallel to the section 16, the end of which is stabilized in the profile 6 fastening the bar legs 15 of the triangle. On a free end of the section 16 stabilized in the profile 6 fastening bar legs 15 of the triangle, the profile 18 joining sections 16 and 17 of bar legs 15 of the triangle is situated. The rotational movement of the profile 18 around longitudinal axis of the section 16 stabilized in the profile fastening bar legs 15 of the triangle is prevented thanks to bending of the end of the section 16 and recess 19 mating with such a bend, made in the profile 18 joining sections of bar legs 15 of the triangle.

The section 17 of the triangle bar leg moving along the section 16 of the leg, which is stabilized in the profile 6 fastening bar legs 15 of the triangle, on its one end is bent at an angle close to right angle, whereas on the other end a local deformation 20 of the bar forming the section 17 is made. The above prevents movable section 17 of the triangle bar leg from its falling out from the profile 18 joining sections of the triangle bar leg 15, with the bent 21 of movable section 17 of the leg of the triangle moving within the section 18 is situated on the side of the profile 6 fastening triangle legs. In the unfolded position, movements of the section 17 are blocked by providing the recess 22 with projections 24 locking the section 17 to the leg 15. Recesses 19 and 22 are situated on the opposite planes of the profile 18.

Thanks to crosswise setting of ends of the fastened ends of the bar legs 15, which coincides with diagonals of bases of fastening profiles 6 as well as due to appropriate bending of these ends, during unfolding of the triangle legs 15 free ends are moving vertically down on the triangle plane and then, they are taken aside on the plane which is perpendicular to the triangle plane. Such displacement ensures better stability of the set of elements of unfolded triangle and prevents the bar legs 15 from folding and the triangle itself from falling down due to incidental knocking or a gust of wind. The legs 15 in unfolded position are stabilized with deadweight of the triangle itself and this is why their incidental turning from working position into folded or partly folded position is impossible. When the triangle is folded, mutual setting of its elements results in the necessity to have only a small area to keep it and its easy preparation to work allows its usage by every road user. Joining between the triangle arms 1 and 2 and the fastening profile 6 is made by means of riveting. At the same time, a rivet is an axis of rotation for the arms 1 and 2, rotating one against each other.
1. horizontal arm of a triangle
2. skew arms of a triangle
3. fabric with fluorescent properties
4. fixing points of the fabric 3
5. points of rotation of triangle arms one in relation to the other
6. fastening profiles
7. arm stiffening 7
8. rotational joints of the arms 1 and 2 sections
9. lock in the arms 2
10. groove of the lock 9
11. projection of the lock 9
12. lock of the horizontal arm 1
13. snap
14. horizontal openings in profiles 6
15. bar legs of the triangle
16. section of triangle bar leg stabilized in the profile 6
17. movable section of triangle leg
18. profile joining the sections 16 and 17 of triangle leg
19. recess in the profile 18
20. deformation of the end of the section 17 of triangle bar leg
21. bendig at right angle of the section 17 of triangle bar leg
22. recess/ opening in the profile 18
23. deformations locking the bar 17
24. projections blocking the section 17
25. flange
26. pin

## Claims

1. The road warning triangle, composed of the surfaces of the arms, which are provided with reflective elements and with the additional fabric with fluorescent properties spread between the arms, and each arm of the triangle divided in two sections, **characterized in that** division of arms 1 and 2 in two sections is executed by means of stable, permanent joint 8 and that this joint 8 has a form of a riveted join, enabling rotation of individual sections of arms one against each other, the locks 9 and 12 prevent automatic folding, and free ends of the skew arms 2 are joined together with the snaps 13; in case of the skew arms 2, in the joining point 8, being a point of their rotation to reach unfolded position which, at the same time, is not a point of rotation in relation to other arms, the locks 9 are placed, at least one on each skew arm 2 of a triangle and each of the triangle bar legs 15 is divided in two sections 16 and 17, and the section 17 can be moved parallel to the section 16, the end of which is stabilized in the profile 6 fastening the bar legs 15 of the triangle.

2. The road warning triangle according to the claim 1, **characterized in that** the fixing points of the fabric with fluorescent properties 3 to the horizontal arms 1 and the skew arms 2 of the triangle are not situated in the rotation points 5 of the arms rotating one in relation to the other.

3. The road warning triangle according to the claim 1 or 2, **characterized in that** the skew arms 2 are movable and they are fixed rotationally to the horizontal arm 1 and, using the same joint, to the fastening profiles 6 to fasten bar legs of the triangle.

4. The road warning triangle according to the claim 3, **characterized in that** joining between the skew arms 2 and the horizontal arm 1 is made as a riveted joint.

5. The road warning triangle according to the claim 1 or 2 or 3 or 4, **characterized in that** the horizontal arm 1 of the triangle is stiffened and that such stiffening 7 fulfills a function of additional load and, moreover, the stiffening 7 of the horizontal arm 1 is shorter than the total length of the horizontal arm 1, unfolded into its working position.

6. The road warning triangle according to the claim 5, **characterized in that** the total length of the stiffening 7 and the fastening profiles 6 of the triangle legs is close to the length of the unfolded horizontal arm 1.

7. The road warning triangle according to the claims 1 to 6, **characterized in that** the locks 9 have a form of grooves 10 and mating with them lengthwise projections 11 situated on reflective and non-reflective planes of the skew arms 2 of the triangle, which are turned one to each other according to the invention.

8. The road warning triangle according to the claims 7, **characterized in that** the additional lock 12 is situated in the middle part of the horizontal arm 1.

9. The road warning triangle according to the claim 1 to 8, **characterized in that** in case of the horizontal arm 1 of the triangle, the joint 8 is situated outside a contour of the arm 1, below the horizontal arm 1 of the triangle.

10. The road warning triangle according to the claim 9, **characterized in that** around the rotational joint 8, the auxiliary flange 25 and the pin 26 mating with it in order to stabilize and fix the position, are mounted.

11. The road warning triangle according to any of the claims 1 to 10, **characterized in that** in the lower part of profiles 6 fastening triangle legs, openings 14 are located horizontally, where appropriately bent ends of the bar legs 15 are introduced into and that the openings 14 are made as shifted ones and situated at the same height in the profile 6 fastening triangle legs.

12. The road warning triangle according to the claim 11,
**characterized in that** on a free end of the section 16 stabilized in the profile 6 fastening the bar legs 15 of the triangle, the profile 18 joining section 16 and 17 of bar legs 15 of the triangle is situated.

13. The road warning triangle according to the claim 12, **characterized in that** the bar leg 15 of the warning triangle is bent in three points, at some distance from the fastening profiles 6.

14. The road warning triangle according to the claim 13, **characterized in that** the section 17 of the triangle bar leg moving along the section 16 of the leg, which is stabilized in the profile 6 fastening the bar legs 15 of the triangle, on its one end is bent at an angle close to right angle, whereas on the other end a local deformation 20 of the bar forming the section 17 is made.

15. The road warning triangle according to the claim 14, **characterized in that** the bent 21 of movable section 17 of the leg of the triangle moving within the section 18 is situated on the side of the profile 6 fastening the legs 15 of the triangle.

16. The road warning triangle according to the claims 1 to 15, **characterized in that** the joining between the triangle arms 1 and 2, and the fastening profile 6 is made by means of riveting, and that at the same time, such rivet is an axis of rotation for the arms 1 and 2, rotating one against each other.

17. The road warning triangle according to the claim 16, **characterized in that** the recess 22 is provided with the projections 24 blocking the section 17 of the leg 15, and the recesses 19 and 22 are situated on the opposite planes of the profile 18.

18. The road warning triangle according to the claim 16, **characterized in that** the section 17 includes deformation 23 and the recess/opening 22, which mates with it.
